# EUROPÄISCHE PATENTSCHRIFT

(11) **EP 2 079 275 B1**
(45) Veröffentlichungstag und Bekanntmachung des Hinweises auf die Patenterteilung: **05.06.2019**
(21) Anmeldenummer: 08106005.5
(22) Anmeldetag: 17.12.2008
(51) Int. Cl.: H05B 6/12

(54) **Induktionskochfeld mit einer Befestigungsvorrichtung zum Befestigen eines Induktorträgers an einem Montagerahmen**
Induction herd with an attachment device and device for fitting inductor holder on a fitting frame
Champ de cuisson à induction doté d'un dispositif de fixation destiné à la fixation d'un support à induction sur un cadre de montage

(30) Priorität: 14.01.2008 ES 200800173
(43) Veröffentlichungstag der Anmeldung: 15.07.2009
(73) Patentinhaber: BSH Hausgeräte GmbH, 81739 München (DE)
(72) Erfinder: Buñuel Magdalena, Miguel Angel, Zaragoza 50017 (ES); Ceamanos Gaya, Jesús, Zaragoza 50016 (ES); Dionisio Micolau, Diego, Zaragoza 50013 (ES); Garcia Herrer, Jose Antonio, Zaragoza 50015 (ES); Garcia Jiménez, Jose Ramon, Zaragoza 50009 (ES); Gómez Ortiz, Sergio, Zaragoza 50012 (ES); Monterde Aznar, Fernando, Zaragoza 50013 (ES)
(74) Vertreter: Richter, Harald

(56) Entgegenhaltungen:
- EP-A- 1 734 308
- DE-C1- 19 600 322
- US-A- 4 169 222

## Beschreibung

Die Erfindung geht aus von einem Induktionskochfeld mit einer Befestigungsvorrichtung zum Befestigen eines Induktorträgers an einem Montagerahmen.

Die EP 1 734 308A beschreibt ein konventionelles Kochgerät mit einem Montagerahmen, der ein Grundgerüst eines Gehäuses des Kochfelds bildet, mit einem Heizelementeträger und einer Befestigungsvorrichtung des Heizelementeträgers. Die Befestigungsvorrichtung umfasst ein Befestigungselement, das eine Heizeinheit mittels einer aufgesteckten Spiralfeder an eine Abdeckplatte des Kochfelds presst.

Die US 4,169,222A beschreibt ein Induktionskochfeld, umfassend ein mit einem Montagerahmen verbundenes Befestigungselement, das eine Leiterplatte eines Anzeigemittels befestigt und mittels einer auf das Befestigungselement aufgesteckten Spiralfeder gegen eine Abdeckplatte presst.

Aus dem Stand der Technik sind vielfältige Varianten von Induktionskochfeldern bekannt. Dabei werden Induktionsheizelemente, die insbesondere eine Induktionsspule und Ferritelemente umfassen, auf Induktorträgern aus einem gut leitenden Material, in der Regel aus Aluminium, getragen. Der Induktorträger ist vertikal federnd mit einem Montagerahmen des Induktionskochfeldes verbunden. Der Montagerahmen bildet ein Grundgerüst eines Gehäuses des Induktionsfelds und trägt die verschiedenen elektronischen und elektrischen Baugruppen des Induktionskochfelds. Der Montagerahmen ist in der Regel aus Stahlblech ausgebildet und wird als Stanz-Biegeblechteil gefertigt.

Zur Befestigung des Induktorträgers an dem Montagerahmen werden turmartige Befestigungselemente mit dem Montagerahmen verbunden, auf die eine Spiralfeder aufgesteckt wird. Die Befestigungselemente dienen einer axialen Führung der Spiralfeder bzw. einer Führung des Induktorträgers in einer in der Betriebskonfiguration des Induktionskochfelds vertikal verlaufenden Federrichtung. Der Induktorträger liegt auf einem axial oberen Ende der Spiralfeder auf, die sich an dem Montagerahmen abstützt. Die Spiralfeder erzeugt in einer endgültigen Betriebskonfiguration eine Anpresskraft, mit welcher die Induktionsheizelemente gegen eine Abdeckplatte aus Glas oder Glaskeramik des Induktionskochfelds angepresst werden, um eine spaltfreie Anlage zu gewährleisten.

Die turmartigen Befestigungselemente umfassen an einem axial unteren Ende ein Innengewinde und werden nach dem Stand der Technik von einer Rückseite bzw. Unterseite des Montagerahmens aus mit dem Montagerahmen verschraubt. Dieser Vorgang erfordert ein Umdrehen des Montagerahmens, um die Schrauben von der Rückseite des Montagerahmens einzuschrauben. Anschließend muss der Montagerahmen erneut um 180° gedreht werden, damit die Spiralfedern und der Induktorträger auf die Befestigungselemente aufgesteckt werden können. Ferner sind zur Befestigung der Befestigungselemente an dem Montagerahmen Schrauben und gegebenenfalls auch Unterlegscheiben notwendig, die in den Montagevorgang einfließen können.

Der Erfindung liegt insbesondere die Aufgabe zugrunde, ein Induktionskochfeld der gattungsgemäßen Art bereitzustellen, das besonders montagefreundlich und kostengünstig herstellbar ist.

Ferner liegt der Erfindung die Aufgabe zugrunde, ein Herstellungsverfahren eines gattungsgemäßen Induktionskochfelds zu vereinfachen.

Die Aufgabe der Erfindung wird durch die unabhängigen Patentansprüche 1 und 9 gelöst. Weiterbildungen und vorteilhafte Ausgestaltungen der Erfindung können den Unteransprüchen entnommen werden.

Die Erfindung geht aus von einem Induktionskochfeld mit einem Montagerahmen, einem Induktorträger und einer einer Befestigungsvorrichtung zum Befestigen eines Induktorträgers an einem Montagerahmen. Das Induktionskochfeld und die Befestigungsvorrichtung umfassen wenigstens ein mit dem Montagerahmen verbundenes Befestigungselement und eine auf das Befestigungselement aufgesteckte Spiralfeder, welche den Induktorträger vertikal federnd lagert und in der Montagekonfiguration eine Anpresskraft von auf dem Induktorträger angeordneten Induktionsheizelementen gegen eine Abdeckplatte des Induktionskochfelds erzeugt.

Ein wichtiger Aspekt der Erfindung besteht darin, dass die Verbindung zwischen dem Befestigungselement und dem Montagerahmen durch einen Eingriff eines an das Befestigungselement angeformten Fortsatzes in ein Loch in dem Montagerahmen hergestellt ist. Im Gegensatz zu herkömmlichen Lösungen, in denen das Befestigungselement von der Rückseite des Montagerahmens aus mit diesem verschraubt wird, kann so auf weitere Bauteile zum Herstellen der Verbindung, beispielsweise auf Schrauben, verzichtet werden. Dadurch kann die Bauteilvielfalt reduziert werden, und es können Kosten eingespart werden. Ferner kann der Eingriff auch dann hergestellt werden, wenn der Montagerahmen auf seiner Rückseite aufliegt und die Rückseite damit nicht zugänglich ist. Ein Umdrehen des Montagerahmens ist daher nicht erforderlich, was die Montage und Herstellung des Induktionskochfelds deutlich vereinfacht.

Eine besonders sichere und einfache Verbindung zwischen dem Befestigungselement und dem Montagerahmen kann erreicht werden, wenn der Fortsatz als Schraubenfortsatz mit einem Gewinde, insbesondere mit einem Außengewinde, ausgebildet ist. Das Loch kann ein dem Gewinde entsprechendes Innengewinde aufweisen, in welches das Gewinde am Fortsatz des Befestigungselements im montierten Zustand eingeschraubt ist. In alternativen Ausgestaltungen der Erfindung kann das Befestigungselement jedoch auch in ein Loch im Montagerahmen eingepresst sein.

Die Montage kann weiter vereinfacht werden, wenn das Befestigungselement einen Bereich mit einer Form aufweist, die zum Ansetzen eines Schraubenschlüssels vorgesehen ist. Der Bereich kann beispielsweise als Sechskant oder als Innen-Sechskant ausgebildet sein. Die Gestaltung als Außen-Sechskant ist insbesondere dann ohne weitere Kosten realisierbar, wenn das Rohmaterial zum Herstellen des Befestigungselements ein Sechskantstab ist, aus welchem das Befestigungselement ausgefräst wird.

Eine sichere Führung des Gewindes kann erreicht werden, wenn der Außen-Sechskantbereich sich unmittelbar an den Fortsatz des Befestigungselements anschließt.

Ferner wird vorgeschlagen, dass das Befestigungselement einen Absatz zum Begrenzen einer Tiefe des Eingriffs in das Loch umfasst. Der Absatz kann in einer besonders kostengünstigen Ausgestaltung der Erfindung auch von der Stirnseite des Außen-Sechskantbereichs gebildet sein.

Wenn das Befestigungselement einen ersten Bereich mit einem Durchmesser, der im Wesentlichen einem Innendurchmesser der Spiralfeder entspricht, umfasst, kann eine weitestgehend spielfreie Lagerung der Spiralfeder in der transversalen Richtung erreicht werden. Wenn das Befestigungselement in einem zweiten axialen Bereich einen reduzierten Durchmesser zum Vermeiden einer Reibung zwischen dem Induktorträger und dem Befestigungselement aufweist, können Geräusche und Verschleiß vermieden werden.

Eine Verliersicherung des Induktorträgers während der Montage kann einfach realisiert werden, wenn ein dem Montagerahmen abgewandtes Ende des Befestigungselements einen Absatz zum Begrenzen einer vertikalen Beweglichkeit des Induktorträgers aufweist.

Die Herstellung des Befestigungselements ist dann besonders einfach, wenn das Befestigungselement als im Wesentlichen axial symmetrisches Bauteil ausgebildet ist, wobei die Axialsymmetrie durch ein Gewinde oder einen Sechskantbereich als Angriffspunkt für einen Schraubenschlüssel gebrochen sein kann.

Ferner betrifft die Erfindung ein Verfahren zum Montieren eines Induktionskochfelds der oben beschriebenen Art. Im Vergleich zu herkömmlichen Montageverfahren wird nach dem erfindungsgemäßen Verfahren die Montage dadurch vereinfacht, dass zur Verbindung des Befestigungselements mit dem Montagerahmen ein an das Befestigungselement angeformter Fortsatz insbesondere von einer Oberseite des Montagerahmens aus mit einem Loch in dem Montagerahmen in Eingriff gebracht wird.

Es zeigen:
- Fig. 1: einen Ausschnitt eines Montagerahmens und eines Induktorträgers eines Induktionskochfelds sowie ein Befestigungselement und eine Spiralfeder,
- Fig. 2: einen Ausschnitt des Montagerahmens aus Fig. 1 mit dem Befestigungselement zur Illustration einer Verbindung zwischen dem Befestigungselement und dem Montagerahmen und
- Fig. 3: das Befestigungselement aus den Fig. 1 und 2 in einer Einzeldarstellung.

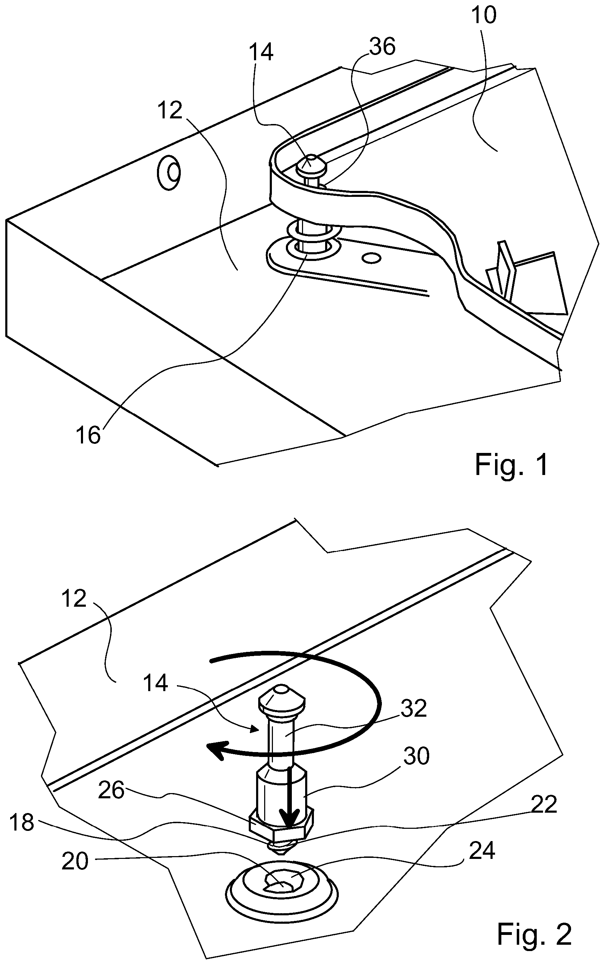

Figur 1 zeigt einen Ausschnitt eines Montagerahmens 12 und eines Induktorträgers 10 eines hier nicht im Ganzen dargestellten Induktionskochfelds. Das Induktionskochfeld umfasst eine Befestigungsvorrichtung, die pro Induktorträger 10 vier jeweils an den Ecken des Induktorträgers 10 angeordnete Befestigungselemente 14 mit jeweils einer auf das Befestigungselement 14 aufgesteckten Spiralfeder 16 aufweist. Das Induktionskochfeld kann beispielsweise zwei Induktorträger 10 zum Tragen von jeweils zwei Induktionsheizelementen (nicht dargestellt) umfassen.

Das Befestigungselement 14 mit der Spiralfeder dient dazu, den Induktorträger 10 vertikal federnd zu lagern und eine Anpresskraft von den auf dem Induktorträger 10 angeordneten Induktionsheizelementen gegen eine Abdeckplatte (nicht dargestellt) zu erzeugen.

Figur 2 zeigt das Befestigungselement 14 und einen Ausschnitt des Montagerahmens 12 in einem Zustand, in welchem das Befestigungselement 14 von dem Montagerahmen gelöst ist. Die Verbindung zwischen dem Befestigungselement 14 und dem Montagerahmen wird durch einen Eingriff eines an das Befestigungselement 14 angeformten Fortsatzes 18 in ein Loch 20 in den Montagerahmen 12 hergestellt. Dazu ist der Fortsatz 18 als Schraubenfortsatz mit einem Gewinde 22, und zwar mit einem Außengewinde, ausgebildet. Das Loch 20 hat ein dem Gewinde 22 entsprechendes Innengewinde 24, in welches das Gewinde 22 am Fortsatz 18 des Befestigungselements 14 bei der Herstellung des Induktionskochfelds eingeschraubt wird.

Um ein Ein- und Ausschrauben des Befestigungselements 14 zu erleichtern, ist das Befestigungselement 14 mit einem Bereich 26 ausgestattet, der die Form eines Außen-Sechskants hat und daher zum Ansetzen eines Schraubenschlüssels geeignet ist. Das Befestigungselement ist aus einem Sechskantstab herausgedreht, so dass der Bereich 26 die unveränderte Außenkontur des Rohmaterials des Befestigungselements 14 hat. Der Bereich 26 schließt sich unmittelbar an den Fortsatz 18 an. An einer dem Montagerahmen 12 zugewandten Stirnseite des als Außen-Sechskant-Bereich ausgebildeten Bereichs 26 hat das Befestigungselement 14 einen Absatz 28, der eine Tiefe des Eingriffs des Fortsatzes 18 in das Loch 20 begrenzt und im vollständig eingeschraubten Zustand des Befestigungselements an einer Oberfläche des Montagerahmens 12 anliegt.

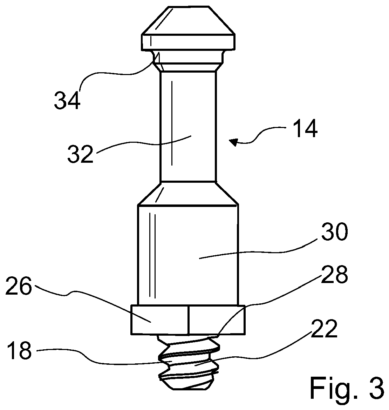

Das in Figur 3 separat dargestellte Befestigungselement ist im Wesentlichen stift- oder turmförmig und umfasst mehrere Bereiche 30, 32 mit jeweils koaxialen, zylindermantelförmigen Oberflächen. Ein erster Bereich 30 hat einen Durchmesser, der im Wesentlichen einem Innendurchmesser der Spiralfeder 16 entspricht, so dass die Spiralfeder in der axialen Federrichtung flexibel und transversal gesichert auf dem Befestigungselement 14 gehalten ist. Ein zweiter Bereich 32 des Befestigungselements hat einen im Vergleich zum ersten Bereich 30 reduzierten Durchmesser. Im montierten Zustand befindet sich das Blechmaterial des Induktorträgers 10 in einer dem zweiten Bereich 32 entsprechenden axialen Lage, so dass durch den reduzierten Durchmesser eine Reibung zwischen dem Induktorträger 10 und dem Befestigungselement 14 sicher vermieden werden kann.

Ein im montierten Zustand dem Montagerahmen 12 des Induktionskochfelds abgewandtes Ende des Befestigungselements 14 weist einen Absatz 34 auf, der eine vertikale Beweglichkeit des Induktorträgers 10 begrenzt.

In den Induktorträger 10 sind Löcher 36 eingearbeitet, durch die das freie Ende des Befestigungselements 14 gesteckt wird. Die Löcher 36 haben ein leichtes Untermaß oder sind leicht oval, schlitzförmig oder schlüssellochförmig ausgebildet (nicht dargestellt), so dass der Induktorträger 10 hinter dem Absatz 34 des Befestigungselements einrasten kann und so bis zum Aufsetzen der Abdeckplatte verliersicher gehalten ist. Eine Spitze des Befestigungselements 14 ist kegelförmig, so dass ein Aufstecken des Induktorträgers 10 vereinfacht wird und so dass der Induktorträger 10 automatisch über dem Befestigungselement 14 zentriert wird.

Zur Herstellung des Induktionskochfelds werden die Befestigungselemente 14 von einer Oberseite des Montagerahmens 12 (bezogen auf die Betriebskonfiguration des Induktionskochfelds) mit dem Loch 20 in dem Montagerahmen 12 in Eingriff gebracht, indem die Fortsätze 18 mit dem Gewinde 22 in das Innengewinde 24 des Lochs eingeschraubt werden. Anschließend werden die Spiralfedern 16 auf die Befestigungselemente 14 aufgesteckt. Schließlich wird der Induktorträger 10 mit den Induktoren auf die Befestigungselemente 14 mit den Spiralfedern 16 aufgesteckt.

Wenn die Abdeckplatte mit dem Montagerahmen 12 verschraubt wird, verschiebt die von der Abdeckplatte über die Induktionsheizelemente auf den Induktorträger 10 ausgeübte Anlagekraft den Induktorträger 10 gegen die Federkraft der Spiralfedern 16 um einige Millimeter nach unten, so dass der Induktorträger sich von dem Absatz 34 des Befestigungselements 14 löst. Die Befestigungsvorrichtung ist so dimensioniert, dass die Spiralfedern 16 im montierten Zustand jeweils eine Anpresskraft von ca. 30 Newton erzeugen.

### Bezugszeichen

- 10: Induktorträger
- 12: Montagerahmen
- 14: Befestigungselement
- 16: Spiralfeder
- 18: Fortsatz
- 20: Loch
- 22: Gewinde
- 24: Innengewinde
- 26: Bereich
- 28: Absatz
- 30: Bereich
- 32: Bereich
- 34: Absatz
- 36: Loch

## Patentansprüche

1. Induktionskochfeld mit einem Montagerahmen (12), der ein Grundgerüst eines Gehäuses des Induktionskochfelds bildet und verschiedene elektronische und elektrische Baugruppen des Induktionskochfelds trägt, mit einem Induktorträger (10) und mit einer Befestigungsvorrichtung zum Befestigen des Induktorträgers (10) an dem Montagerahmen (12), umfassend wenigstens ein mit dem Montagerahmen (12) verbundenes Befestigungselement (14) und eine auf das Befestigungselement (14) aufgesteckte Spiralfeder (16), welche den Induktorträger (10) vertikal federnd lagert und eine Anpresskraft von auf dem Induktorträger (10) angeordneten Induktionsheizelementen gegen eine Abdeckplatte erzeugt, wobei die Verbindung zwischen dem Befestigungselement (14) und dem Montagerahmen (12) durch einen Eingriff eines an das Befestigungselement (14) angeformten Fortsatzes (18) in ein Loch (20) in dem Montagerahmen (12) hergestellt ist.

2. Induktionskochfeld nach Anspruch 1, **dadurch gekennzeichnet, dass** der Fortsatz (18) als Schraubenfortsatz mit einem Gewinde (22) ausgebildet ist.

3. Induktionskochfeld nach Anspruch 2, **dadurch gekennzeichnet, dass** das Loch (20) ein dem Gewinde (22) entsprechendes Innengewinde (24) aufweist, in welches das Gewinde (22) am Fortsatz (18) des Befestigungselements (14) eingeschraubt ist.

4. Induktionskochfeld nach einem der vorhergehenden Ansprüche, **dadurch gekennzeichnet, dass** das Befestigungselement (14) einen Bereich (26) mit einer Form aufweist, die zum Ansetzen eines Schraubenschlüssels vorgesehen ist.

5. Induktionskochfeld nach Anspruch 4, **dadurch gekennzeichnet, dass** der Bereich (26) als Außensechskant-Bereich ausgebildet ist und sich axial unmittelbar an den Fortsatz (18) anschließt.

6. Induktionskochfeld nach einem der vorhergehenden Ansprüche, **dadurch gekennzeichnet, dass** das Befestigungselement (14) einen Absatz (28) zum Begrenzen einer Tiefe des Eingriffs des Fortsatzes (18) in das Loch (20) umfasst.

7. Induktionskochfeld nach einem der vorhergehenden Ansprüche, **dadurch gekennzeichnet, dass** das Befestigungselement (14) einen ersten Bereich (30) mit einem Durchmesser aufweist, der im Wesentlichen einem Innendurchmesser der Spiralfeder (16) entspricht und einen zweiten Bereich (32) mit einem reduzierten Durchmesser zum Vermeiden einer Reibung zwischen dem Induktorträger (10) und dem Befestigungselement (14) aufweist.

8. Induktionskochfeld nach einem der vorhergehenden Ansprüche, **dadurch gekennzeichnet, dass** an ein dem Montagerahmen (12) abgewandtes Ende des Befestigungselements (14) ein Absatz (34) zum Begrenzen einer vertikalen Beweglichkeit des Induktorträgers (10) angeformt ist.

9. Verfahren zum Montieren eines Induktionskochfelds nach einem der vorhergehenden Ansprüche, **dadurch gekennzeichnet, dass** zur Verbindung des Befestigungselements (14) mit dem Montagerahmen (12) ein an das Befestigungselement (14) angeformter Fortsatz (18) von einer Oberseite des Montagerahmens (12) aus mit einem Loch (20) in dem Montagerahmen (12) in Eingriff gebracht wird.

## Claims

1. Induction hob with an assembly frame (12), which forms a basic structure of a housing of the induction hob and supports various electronic and electrical subassemblies of the induction hob, with an inductor support (10) and with a fastening apparatus for fastening the inductor support (10) to the assembly frame (12), comprising at least one fastening element (14) connected to the assembly frame (12) and a coil spring (16) fitted to the fastening element (14), which mounts the inductor support (10) in a vertically resilient manner and generates a clamping force from induction heating elements arranged on the inductor support (10) acting against a cover plate, wherein the connection between the fastening element (14) and the assembly frame (12) is produced by an engagement of an extension (18) moulded on the fastening element (14) into a hole (20) in the assembly frame (12).

2. Induction hob according to claim 1, **characterised in that** the extension (18) is embodied as a screw extension with a thread (22).

3. Induction hob according to claim 2, **characterised in that** the hole (20) has an internal thread (24) corresponding with the thread (22), into which the thread (22) is screwed at the extension (18) of the fastening element (14).

4. Induction hob according to one of the preceding claims, **characterised in that** the fastening element (14) has a region (26) with a shape which is provided for the application of a wrench.

5. Induction hob according to claim 4, **characterised in that** the region (26) is embodied as an external hex region and connects directly to the extension (18).

6. Induction hob according to one of the preceding claims, **characterised in that** the fastening element (14) comprises a shoulder (28) for delimiting a depth of the engagement of the extension (18) into the hole (20).

7. Induction hob according to one of the preceding claims, **characterised in that** the fastening element (14) has a first region (30) with a diameter which substantially corresponds with an internal diameter of the coil spring (16) and a second region (32) with a reduced diameter for avoiding friction between the inductor support (10) and the fastening element (14).

8. Induction hob according to one of the preceding claims, **characterised in that** a shoulder (34) for delimiting a vertical mobility of the inductor support (10) is moulded onto an end of the fastening element (14) which faces away from the assembly frame (12).

9. Method for assembling an induction hob according to one of the preceding claims, **characterised in that**, in order to connect the fastening element (14) to the assembly frame (12), an extension (18) moulded onto the fastening element (14) is brought into engagement with a hole (20) in the assembly frame (12) starting from an upper side of the assembly frame (12).

## Revendications

1. Table de cuisson à induction comprenant un cadre de montage (12) qui forme une structure de base d'un boîtier de la table de cuisson à induction et porte différents ensembles électroniques et électriques de la table de cuisson à induction, comprenant un support d'inducteur (10) et comprenant un dispositif de fixation pour la fixation du support d'inducteur (10) sur le cadre de montage (12), comprenant au moins un élément de fixation (14) relié au cadre de montage (12) et un ressort hélicoïdal(16) emboîté sur l'élément de fixation (14), lequel ressort hélicoïdal loge le support d'inducteur (10) verticalement de manière élastique et génère une force de pression d'éléments de chauffage à induction disposés sur le support d'inducteur (10) contre une plaque de recouvrement, la liaison entre l'élément de fixation (14) et le cadre de montage (12) étant établie par une prise d'un prolongement (18) formé sur l'élément de fixation (14) dans un trou (20) situé dans le cadre de montage (12).

2. Table de cuisson à induction selon la revendication 1, **caractérisée en ce que** le prolongement (18) est réalisé comme prolongement de vissage ayant un filetage (22).

3. Table de cuisson à induction selon la revendication 2, **caractérisée en ce que** le trou (20) présente un filetage intérieur (24) correspondant au filetage (22), dans lequel filetage intérieur est vissé le filetage (22) situé sur le prolongement (18) de l'élément de fixation (14).

4. Table de cuisson à induction selon l'une quelconque des revendications précédentes, **caractérisée en ce que** l'élément de fixation (14) présente une zone (26) ayant une forme qui est ménagée pour l'application d'une clé de serrage.

5. Table de cuisson à induction selon la revendication 4, **caractérisée en ce que** la zone (26) est réalisée comme zone hexagonale extérieure et se raccorde axialement directement au prolongement (18).

6. Table de cuisson à induction selon l'une quelconque des revendications précédentes, **caractérisée en ce que** l'élément de fixation (14) comprend un gradin (28) destiné à limiter une profondeur de la prise du prolongement (18) dans le trou (20).

7. Table de cuisson à induction selon l'une quelconque des revendications précédentes, **caractérisée en ce que** l'élément de fixation (14) présente une première partie (30) ayant un diamètre qui correspond essentiellement à un diamètre intérieur du ressort hélicoïdal (16), et une deuxième partie (32) ayant un diamètre réduit destiné à éviter un frottement entre le support d'inducteur (10) et l'élément de fixation (14).

8. Table de cuisson à induction selon l'une quelconque des revendications précédentes, **caractérisée en ce qu'**un gradin (34) destiné à limiter une mobilité verticale du support d'inducteur (10) est formé sur une extrémité de l'élément de fixation (14), détournée du cadre de montage (12).

9. Procédé de montage d'une table de cuisson à induction selon l'une quelconque des revendications précédentes, **caractérisé en ce que** pour la liaison de l'élément de fixation (14) avec le cadre de montage (12), un prolongement (18) formé sur l'élément de fixation (14) est mis en prise avec un trou (20) dans le cadre de montage (12) depuis un côté supérieur du cadre de montage (12).
